# EUROPEAN PATENT APPLICATION

(11) **EP 4 361 931 A1**
(43) Date of publication of application: **01.05.2024**
(21) Application number: 22204544.5
(22) Date of filing: 28.10.2022
(51) Int. Cl.: G06Q 20/10, G06Q 20/22

(54) **SYSTEM FOR ENABLING PAYMENTS**

(71) Applicant: Mastercard International Incorporated, Purchase NY 10577 (US)
(72) Inventor: HOSNY, Ahmed, Dublin, D18 (IE)
(74) Representative: Barker Brettell LLP

(57) **Abstract**

There is provided a computer implemented method for enabling a transaction to proceed in the event of a fault on a payment rail. The method comprising: receiving a request, from a merchant, to initiate a transaction from a user account to a merchant account, the transaction being of a first payment type associated with a first payment rail; determining that there is a fault on the first payment rail; routing the transaction through a second payment rail and settling the transaction such that funds are transferred to the merchant account.

## Description

### Field

The present invention relates to methods and systems for managing transactions in the event that a particular payment rail is not functional. More specifically, the present invention relates to determining for a transaction between a merchant and a customer that the payment rail associated with the payment type is not functioning and routing the payment through a different payment rail.

### Background

There are many ways in which transactions may be conducted between a customer and a merchant. Examples include card payments, such as using debit and credit cards, or the more recent technology of open banking payments, where payments are made directly between bank accounts. Each transaction type has associated with it a "payment rail", which is a platform or network infrastructure that effects the transaction.

In some systems, at the instance of performing a transaction between a customer and merchant, such as in an online (i.e., internet) setting, a customer can now choose which type of transaction they wish to perform the payment through, so long as that type of payment is supported by the merchant. For instance, they may select a card payment (using their credit or debit card) which would be carried out through the card rail, or they may select an open banking payment which would be carried out through the open banking account rail.

However, there are different systems responsible for authenticating and authorising payments on each of these rails. On the card rails, there are specialized systems for authentication and authorization which are different to the systems supporting the open banking rails. These are performed by the issuing bank (in the case of card payments) and the customers bank account, i.e., account holding institution, (in the case of open banking).

The availability of these systems for authentication and authorization on each rail is not always guaranteed and sometimes one or more of these systems may not be functional. This can cause a payment to fail if initiated on a specific rail which has one or more systems that are down. Typically, this would lead to a "stand-in" performing the authorization or authentication of the transaction where the card network may act on behalf of the issuer to perform authorisation and/or authentication processes. However, the payment network only has limited information on the customer (unlike the details held by the issuer and the customers bank), so to ensure security remains the same, and so the number of fraudulent transactions do not increase, using the stand-in system is likely to lead to an increased number of declined transactions.

The present invention is directed to methods and systems to address this issue to ensure the security of transactions is maintained and fraud kept to a minimum, whilst increasing the number of transactions that can be securely approved in the event of a particular payment rail being down.

### Summary of Invention

According to a first aspect there is provided a computer implemented method for enabling a transaction to proceed in the event of a fault on a payment rail, the method comprising: receiving a request, from a merchant, to initiate a transaction from a user account to a merchant account, the transaction being of a first payment type associated with a first payment rail; determining that there is a fault on the first payment rail; routing the transaction through a second payment rail, wherein the second payment rail is associated with a second payment type, wherein routing the transaction through the second payment rail comprises: determining an account identifier associated with the user account, the account identifier being associated with the second payment type; authenticating the transaction, using the second payment rail, said authenticating comprising using the account identifier and security data received from the user; authorising the transaction, using the second payment rail; settling the transaction such that funds are transferred to the merchant account.

In this way, in the event of a transaction being requested on a particular payment rail which is currently down (i.e., has a fault on it such that it is not functioning) then the security can be maintained, and fraud avoided, without the transaction being unnecessarily declined through having to rely on a stand-in procedure. Instead, the transaction is routed through an alternative payment rail maintaining the same level of security of authentication and authorisation as would have been used in the particular payment rail on which the payment was originally requested.

The steps of authenticating and authorising involves using the authentication and authorisation procedures of the second payment rail, rather than the authentication and authorisation procedures of the first payment rail (i.e., that on which the original request was directed towards). This is enabled by identifying the account identifier associated with the second type of payment so that authentication and authorisation can be carried out using the second payment rail. For instance, although the transaction may have been initially requested on the first payment rail, which is done through providing a first account identifier, by converting (i.e., mapping) the first account identifier to a second account identifier (which is associated with the second payment rail), the transaction can proceed using the second payment rail.

In some arrangements, the account identifier may be a second account identifier, and the method may further comprise mapping a first account identifier, associated with the user account and being associated with the first payment type, to the second account identifier. Mapping may involve determining the associated account identifiers that are associated with the user account. For instance, if the first payment type is a card payment the first identifier may be a card number (such as a PAN), and if the second payment type is an open banking payment, then the second payment type may be an account number. Alternatively, if the first payment type is an open banking payment the first identifier may be an account number, and if the second payment type is a card payment, then the second payment type may be a card number (such as a PAN). The account number and card numbers may both be associated with the same customer (i.e., user) account.

The first payment rail may be a card payment rail, and the second payment rail may be an open banking payment rail. In this way, the first payment type may be a card transaction, and the transaction is initiated as a card payment. The second payment type may be an open banking payment.

Preferably, the method further comprises: generating a virtual account associated with the merchant, and wherein authorising the transaction comprises authorising the transaction against the virtual account associated with the merchant.

In this way, the authorisation may be performed against a virtual account associated with the merchant which is different to the merchant's actual account. This can enable the payment to be made on the second payment rail despite being requested on the first payment rail. Advantageously, generating the virtual accounts makes it easier for reconciliation, reversals and chargebacks to be applied. It is further noted that the merchant, and customer may be unaware of these virtual accounts. Their purpose is for internal processing of the payment to enable the payment to be diverted through a different rail. In some arrangements these virtual accounts may only exist for a short period of time.

Alternatively, the first payment rail may be an open banking payment rail, and the second payment rail may be a card payment rail.

In this way, the first payment type may be an open banking transaction, and the transaction is initiated as an open banking payment. The second payment type may be a card payment.

Preferably, the method may further comprise: generating a virtual account associated with the merchant, and wherein authorising the transaction comprises authorising the transaction against a virtual card associated with the virtual account associated with the merchant.

In this way, the authorisation may be performed against a virtual card associated with a virtual account associated with the merchant which is different to the merchant's actual account. This can enable the payment to be made on the second payment rail despite being requested on the first payment rail. The virtual account that is generated may have a virtual card associated with it. The virtual account therefore has an associated card number and account number.

Authorising the transaction involves determining that the transaction is authorised to occur. This may involve determining that the account from which the payment is being made has sufficient funds, and/or that it is not blacklisted for fraud, among other reasons. The authorising may be carried out using the account identifier. This may be to determine which account is being authorised.

Preferably the method may further comprise generating a virtual depository account, and wherein settling the transaction such that funds are transferred to the merchant account comprises transferring the funds from the virtual merchant account to the virtual depository account, and subsequently transferring funds from the virtual depository account to the merchant account.

After authorisation of the transaction against the virtual card associated with the virtual account the funds may initially be transferred to the virtual merchant account from the user (i.e., customer) account. This is preferably achieved using the card rail. The transfer of funds from the virtual depository account to the merchant account is preferably done using the open banking rail. In this way, the transaction appears to the merchant to have been an open banking transaction, but it has been enabled using the authentication and authorisation of the card payment rail.

In contrast, after authorisation of the transaction against the virtual account the funds may initially be transferred to the virtual merchant account from the user (i.e., customer) account. This is preferably achieved using the open banking payment rail. The transfer of funds from the virtual depository account to the merchant account is preferably then carried out using the card rail. In this way, the transaction appears to the merchant to have been a card transaction, but it has been enabled using the authentication and authorisation of the open banking payment rail.

In both above instances, the transferring the funds from the virtual merchant account to the virtual depository account may be carried out via the card payment rail (i.e., a card payment), alternatively it may be carried out via the open banking payment rail (i.e., an open banking payment).

In some arrangements, the virtual depository account may be unique for each transaction. In this way, chargebacks at a later stage, if necessary, can easily be tracked by having each virtual depository account been associated with a single transaction.

In other arrangements, a virtual depository account may be associated with multiple transactions. For instance, the virtual depository account may be associated with all transactions relating to a particular user (i.e., customer). In this way, there may be a single virtual depository account associated with each user.

The determining that the particular payment rail is down may comprise determining that the authorisation protocol of the particular payment rail is down. In other arrangements, determining that the particular payment rail is down may comprise determining that the authentication protocol of the particular payment rail is down.

Preferably, authenticating the transaction may comprise using 3DS authentication. 3D secure authentication is a protocol designed to be an additional security layer for online credit and debit card transactions. 3DS authentication requires two step authentication.

The authentication may involve requesting security information from the customer. Upon receiving the security information from the customer this may be validated to authenticate the user. The security information may comprise a password, biometric data, passcode, or other type of security credential that is known.

In other arrangements the authentication may only require one step, or more than two step authentication.

In other arrangements, the authentication may be open banking authentication procedures. The authentication may involve requesting security information from the customer. Upon receiving the security information from the customer this may be validated to authenticate the user. The security information may comprise a password, biometric data, passcode, or other type of security credential that is known.

In some arrangements, the method further comprises requesting the user for consent regarding the transaction. This may involve using the authentication and consent service for open banking transactions where the second payment rail is an open banking payment rail. In other arrangements, it may be to confirm that the user is happy to make the payment when the second payment rail is the card rail.

Determining an account identifier associated with the user account may comprise receiving the account identifier from the merchant. In this way, the merchant may have already received the account identifier from the user when they entered into the transaction with the merchant. In other arrangements, the method may comprise a further step of inviting the user to indicate the account identifier. This may comprise the user being prompted to enter the account identifier on the device on which they have entered into the transaction with the merchant. For instance, they may be presented with a message on their device requesting them to enter their account identifier. This may then be received at the merchant and/or passed to the system.

Preferably, the method may further comprise responding to the merchant with confirmation that the transaction has been completed. This may comprise indicating to the merchant that the transaction has been completed on the first payment rail, despite the authentication and authorisation being carried out on the second payment rail.

The account identifier may be a PAN or an account number. In other arrangements, the account identifier may be any other data that enables the account to be identified.

Preferably, the method may further comprise if authentication fails declining the transaction, and/or if authorisation fails declining the transaction.

The transaction may otherwise be referred to as a payment. The payment may be a payment being made by the user (i.e., customer) to the merchant. The merchant account may be the merchant's actual account used for storing their funds and making and receiving payments. The virtual accounts may be accounts that are temporarily (or in some instances permanently) created for the purposes of making the transaction and do not have an actual physical card associated with them.

According to a further aspect there is provided a system for enabling transactions to proceed in the event of a fault on a payment rail, the system comprising a processor configured to performs the steps of: receiving a request, from a merchant, to initiate a transaction from a user account to a merchant account, the transaction being of a first payment type associated with a first payment rail; determining that there is a fault on the first payment rail; routing the transaction through a second payment rail, wherein the second payment rail is associated with a second payment type, wherein routing the transaction through the second payment rail comprises: determining an account identifier associated with the user account, the account identifier being associated with the second payment type; authenticating the transaction, using the second payment rail, said authenticating comprising using the account identifier and security data received from the user; authorising the transaction, using the second payment rail; settling the transaction such that funds are transferred to the merchant account.

The system is further configured to perform the methods of the above aspect.

According to a further aspect there is provided a non-transitory computer-readable medium comprising instructions which, when executed by a computer, cause the computer to carry out the steps of: receiving a request, from a merchant, to initiate a transaction from a user account to a merchant account, the transaction being of a first payment type associated with a first payment rail; determining that there is a fault on the first payment rail; routing the transaction through a second payment rail, wherein the second payment rail is associated with a second payment type, wherein routing the transaction through the second payment rail comprises: determining an account identifier associated with the user account, the account identifier being associated with the second payment type; authenticating the transaction, using the second payment rail, said authenticating comprising using the account identifier and security data received from the user; authorising the transaction, using the second payment rail; settling the transaction such that funds are transferred to the merchant account.

The non-transitory computer-readable medium is further configured to perform the methods of the above aspect.

According to a further aspect there is provided a computer program product comprising instructions which, when the program is executed by a computer, cause the computer to carry out the steps of: receiving a request, from a merchant, to initiate a transaction from a user account to a merchant account, the transaction being of a first payment type associated with a first payment rail; determining that there is a fault on the first payment rail; routing the transaction through a second payment rail, wherein the second payment rail is associated with a second payment type, wherein routing the transaction through the second payment rail comprises: determining an account identifier associated with the user account, the account identifier being associated with the second payment type; authenticating the transaction, using the second payment rail, said authenticating comprising using the account identifier and security data received from the user; authorising the transaction, using the second payment rail; settling the transaction such that funds are transferred to the merchant account.

The computer program product is further configured to perform the methods of the above aspect.

### Description of Figures

Figure 1 shows a schematic depiction of a system for enabling a transaction to occur between a merchant and a customer, including the multirail environment according to an aspect of the present invention;
Figure 2 shows a flow diagram of a method according to an aspect of the present invention for effecting a payment from a customer at a merchant online environment;
Figure 3 shows a series of screenshots of pages that may be viewed at the customer device when making an open banking payment when the open banking rail is functioning;
Figure 4 shows a series of screenshots of pages that may be viewed at the customer device when making a card payment when the card rail is functioning;
Figure 5 shows a series of screenshots of pages that may be viewed at the customer device when making an open banking payment when the open banking rail is not functioning;
Figure 6 shows a series of screenshots of pages that may be viewed at the customer device when making a card payment when the card rail is not functioning;
Figure 7 shows a flow diagram of a method according to an aspect of the present invention for enabling a transaction to proceed in the event of a fault on a payment rail; and
Figure 8 shows a data processing device according to embodiments of the present disclosure capable of performing the method of Figure 1 and 7.

### Detailed Description

The following terms that will be used herein are provided below along with their definitions:
Payment rail: This is a platform or network infrastructure that effects a particular type of transaction. Each type of transaction will have associated with it a specific payment rail. The payment rail is involved in the authentication and authorization processes for the payment type.

Payment type: This is the category of payment, i.e., each payment type has a specific payment rail associated with it. A payment type may be, for instance, a card payment, or an open banking payment.

Open banking payment: This is a bank-to-bank transaction where the payment is made directly between two bank accounts. This may be facilitated by the use of one or more application programming interfaces (APIs).

Card payment: This is a transaction that is made using a card that is associated with a card account. Types of cards may include, but are not limited to, credit-, debit-, smart, cash-, and charge cards.

PAN: primary account number or payment card number. This is the card holder's primary account number for their card (e.g., debit, credit etc.).

Account number: This is the account number associated with the bank account. For instance, the bank account from which an open banking payment may be made. In some instances this may be referred to as International Bank Account Number or IBAN.

Environment: The environments described herein are networks that manage the payment. The environments may be software and may comprise one or more modules that are responsible for performing a host of functions. Each environment may be run on one or more servers and may be in communication with other environments.

Multi-rail environment: The multi-rail environment is an environment that comprises module(s) that are responsible for managing the processing of payments initiated by a merchant between the merchant and two or more different payment environments. For instance, this may be between the open banking and card environments. In other arrangements, it may be between other payment environments.

Merchant: This is the party which is selling goods or services which the customer is purchasing.

Account holding institution: this is the banking institution responsible for the customer's account which is being used for an open banking payment. This may also be referred to Account Services Payment Services Provider or ASPSP.

Virtual account: A virtual account is an account that does not have a physical card associated with it. A virtual account has a unique account number associated with it and can perform the same types of payments as a conventional physical account. A virtual account may have an associated linked virtual card. A virtual account may have a virtual account number, and an associated virtual PAN. Virtual accounts do not hold a balance as they cannot settle a transaction so must be associated with a physical bank account. Virtual accounts may also be referred to as internal accounts herein.

The present invention relates to method and systems for enabling a transaction to be successfully completed in the event that the payment rail associated with the transaction is down. More specifically, the present invention is directed to determining for a transaction between a merchant and a customer that the payment rail associated with the payment type is not functioning. If it is determined that the payment rail is down the transaction is routed through an alternative payment rail associated with an alternative type of payment. Thus, authentication and authorisation of the transaction can be carried out using the alternative payment rail.

In this way, in the event of a transaction being requested on a particular payment rail which is currently down (i.e., has a fault on it such that it is not functioning) then the security of the transaction can be maintained, and fraud avoided, without the transaction being unnecessarily declined through having to rely on a stand-in procedure. Instead, the transaction is routed through an alternative payment rail maintaining the same level of authentication and authorisation as would have been used in the particular payment rail on which the payment was originally requested.

Furthermore, the use of virtual (otherwise referred to as "internal") accounts in this method can enable the payment to be authenticated and authorised on the alternative payment rail to the payment type which it was originally requested but such that it appears to the merchant that the payment has been carried out as the first type of transaction.

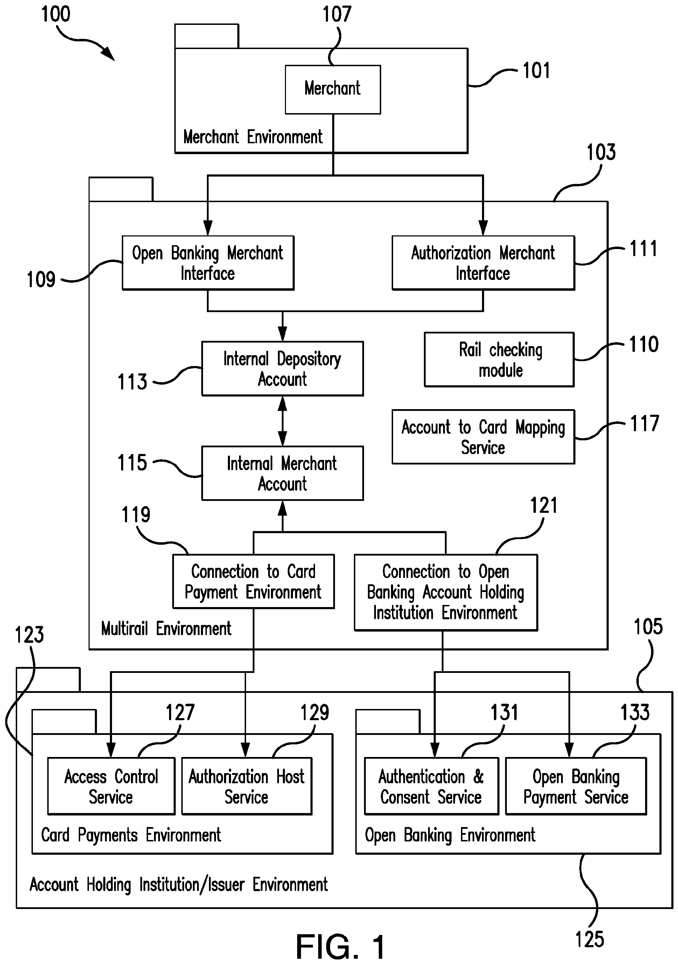

Figure 1 shows a system 100 for enabling a transaction to occur between a merchant and a customer. The system 100 includes a merchant environment 101 which comprises merchant 107. The merchant 107 has associated with it a merchant account for receiving payments from customers. The merchant 107 may be offering any type of goods or services. In some arrangements the merchant may be an online merchant, in that they are selling at least some of their goods or services over the internet.

System 100 also comprises multi-rail environment 103. The multi-rail environment 103 sits between the merchant environment 103 and an issuer/account holding institution environment 105. The multi-rail environment works on behalf of both the account holding institution (responsible for open banking transaction) and the issuer (responsible for card payments) and provides a consistent interface allowing easy switching of payments between the open banking and the card payment rails, as will be described further below. Multi-rail environment 103 includes an open banking interface 109 for interfacing with the merchant 107 for open banking transactions. Multi-rail environment 103 also includes an (card) authorisation merchant interface 111 for interfacing with the merchant 107 for card transactions.

Multi-rail environment 103 comprises internal depository account 113 and internal merchant account 115. Internal depository account 113 and internal merchant account 115 are virtual accounts involved in processing the transaction in the event that a particular payment rail is not functioning, as will be described in more detail below.

Account to card mapping service module 117 is also shown in the multi-rail environment 103 for mapping cards numbers to account numbers in the event that a particular payment rail is not functioning, as will be described in more detail below. Multi-rail information also comprises rail checking module 110 which is responsible for determining if a particular payment rail is functioning.

Multi-rail environment 103 further comprises a connection module 119 responsible for connection to the card payments environment 123, and a connection module 121 for connection to the open banking holding institution environment 125.

The issuer/account holding institution environment 105 comprises card payment environment 123 which itself comprises access control services module 127 and authorization host service module 129. These are responsible for handling card payments on the card rail. The access control services module 127 is responsible for authenticating cardholders and allowing the merchant to initiate an authenticated authorization request. The authorization host service module 129 is responsible for handling financial requests from the card networks and responding to them.

The issuer/account holding institution environment 105 further comprises open banking environment 125 which itself comprises authentication and consent service 131 and open banking payment service 133. These are responsible for handling card payments on the open banking rail. The authentication and consent service 131 is responsible for authenticating the open banking customers and getting their consent for payment initiation. The open banking payment service 133 is responsible for managing the actual payment flow and supporting the payment method (and rails) enabled via open banking (like real time payment (RTP), Single Euro Payments Area (SEPA), Pix, etc.).

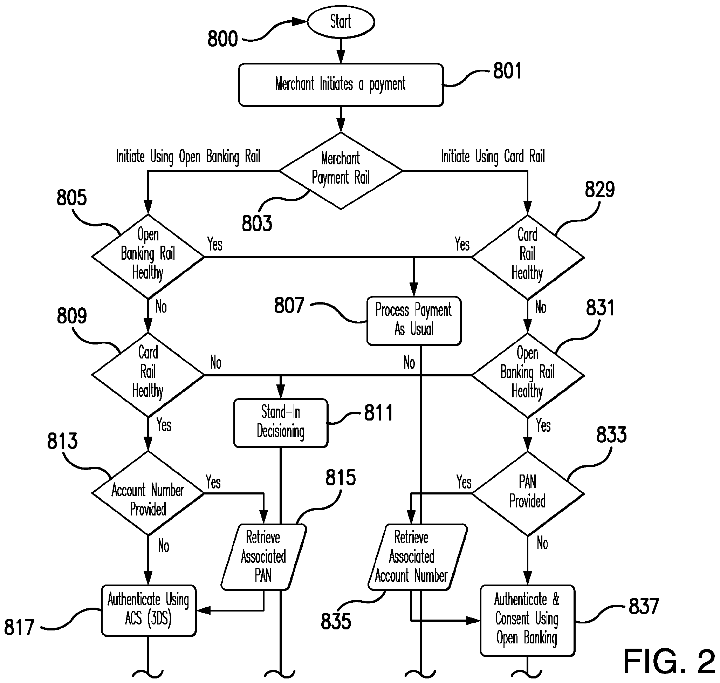

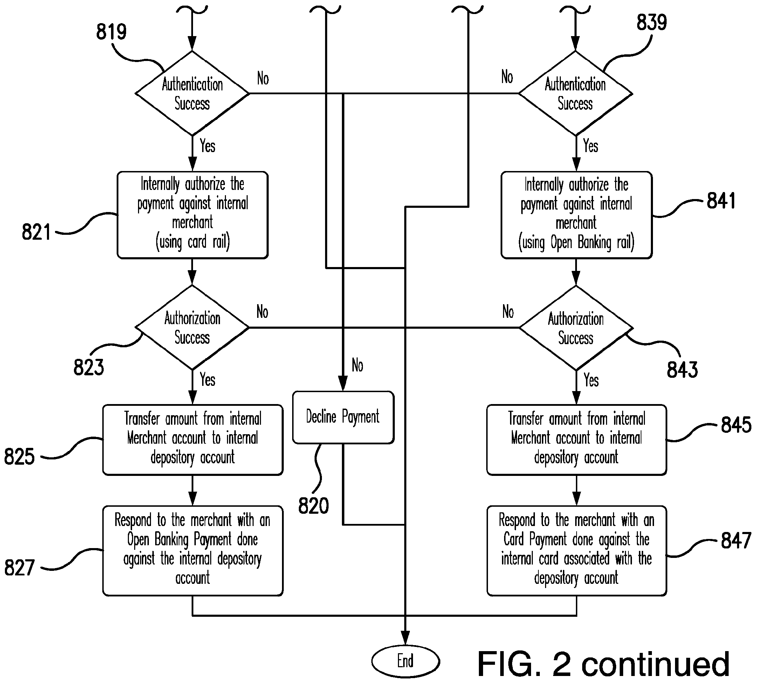

Figure 2 shows a flow diagram illustrating the steps involved in a method 800 according to an aspect of the present invention for effecting a payment from a customer at a merchant online environment (such as website, or app). Method 800 is utilising the multi-rail environment 103 of the present invention.

At step 801 the merchant 107 commences the process by initiating the payment within the merchant environment 101. The payment being initiated is a payment from a customer on, for instance, the merchant's online website or app. This initiating involves sending a payment request from the merchant environment 101 to the multi-rail environment 103 via the merchant payment rail 803 the request being for the payment to be made as either an open banking payment or a card payment, i.e., using the card rail or open banking rail. Whether the payment is requested as open banking or a card payment is typically driven by the customer deciding how they wish to make the payment, or it may be decided by the merchant 107 who may have indicated a particular type of payment as a preference for the customer to use.

In the case where the payment has been initiated as an open banking payment this request is received at the open banking merchant interface 109. It is then passed to the rail checking module 103 where it is determined 805 if the open banking rail is healthy/functional (i.e., not down). This may be done by sending a request message to the open banking environment (such as a health check message, such as by using a "health check" API) from the multirail environment. If no response is received to the request, then it is known that the open banking rail is not functional (i.e., not healthy). In some arrangements it may be the entire open banking rail that is down. In other arrangements it may be that one or both of the authentication and authorisation parts of the open banking rail that are not currently in operation (such as the authentication and consent service).

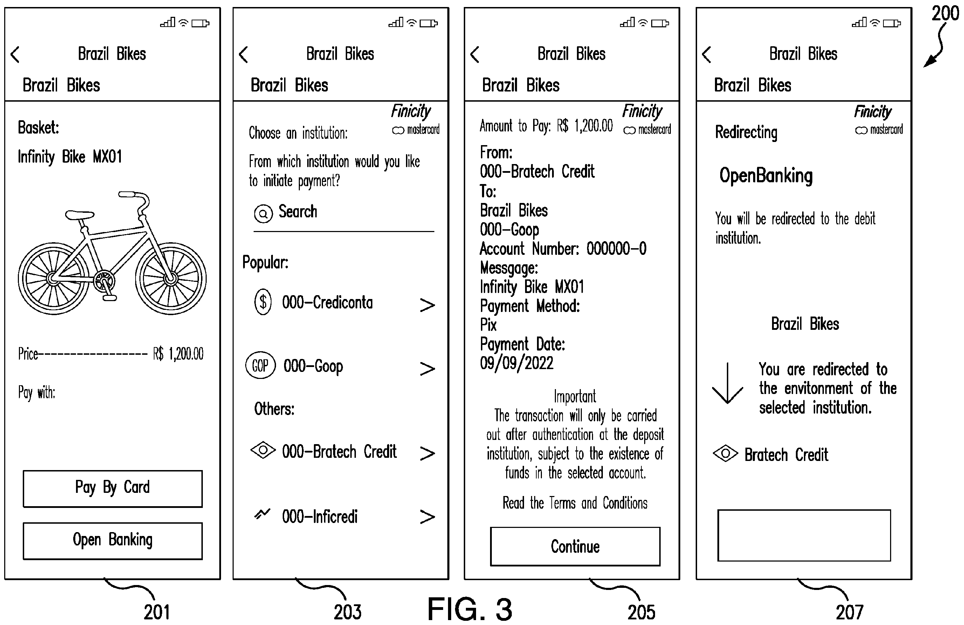

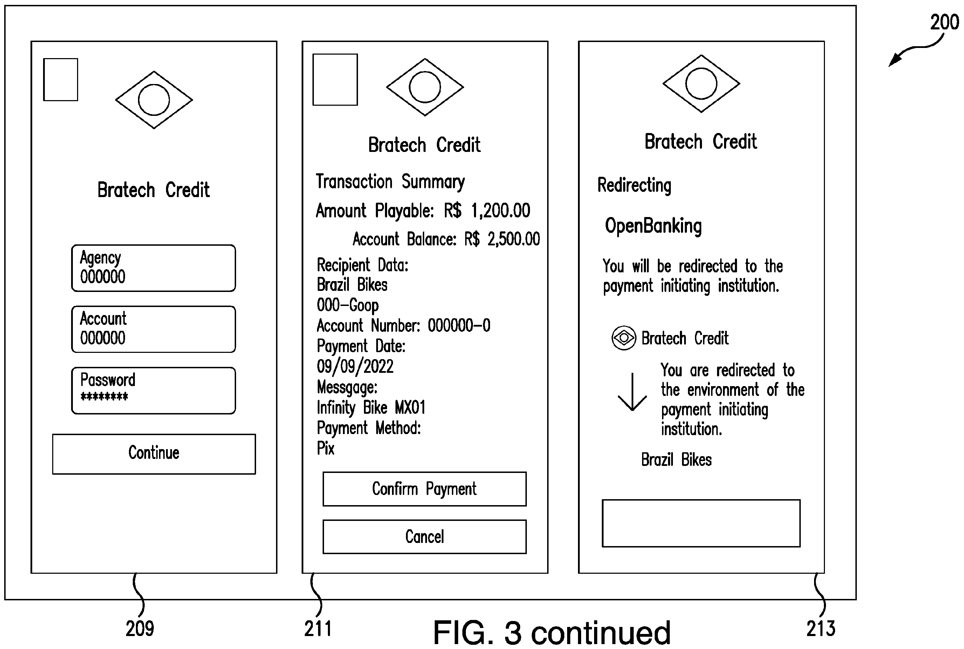

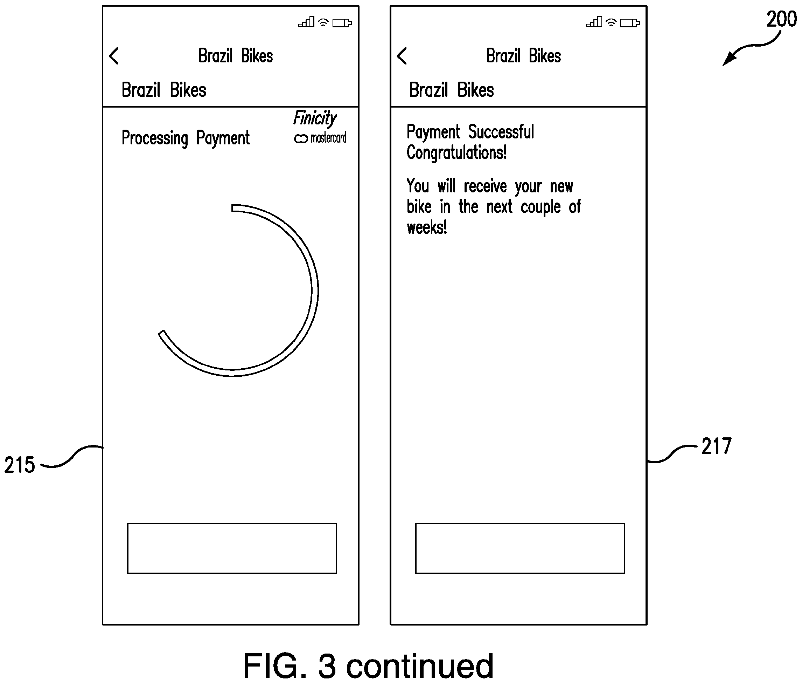

If the open banking rail is healthy and functioning correctly then the payment can proceed as normal via the open banking rail 807 using open banking authentication and authorisation. This is as described in relation to Figure 3 below.

If, however, the open banking rail is down then a decision is made, at the rail checking module 103, to switch to an alternative payment rail which may be functional. In this instance, it is then determined 809, at the rail checking module 103, if the card rail is healthy. This may be done using the same method as set out above determining if the open banking rail is healthy.

If it is determined that the card rail is also not healthy then conventional stand-in decisioning may be taken 811. The stand-in decisioning may be commenced by a message being sent from the multi-rail environment (i.e., rail checking module 110) to the payment network provider (such as the card provider, e.g., MasterCard^{®}). The payment network provider is then responsible for performing authentication and authorisation to decide whether the payment should be accepted or declined. As outlined above, as the payment network provider has limited information on the customer to maintain the same level of security, and reduce fraud, a transaction that might typically be successfully authenticated and authorised by the open banking or card rails is more likely to be declined by the stand-in procedure. In other arrangements the stand-in procedure may be carried out by the entity that is responsible for maintaining the multi-rail environment, wherein the same issues as outlined above for having the payment network perform this stand-in decisioning applies. In some arrangements, the payment network provider and the entity that is responsible for maintaining the multi-rail environment may be the same.

Alternatively, if it is determined that the card rail is healthy at step 809 then the transaction may be routed via the card rail, even though the payment was initially initiated by the merchant on the open banking rail. In this way, the authorisation and authentication of the card rail can be utilised thus maintaining the high level of security and reducing fraud (as would have been expected if the open banking rail was used), without increasing the number of transactions that are declined.

If the card rail is determined to be healthy at step 809 it is then determined 813, by account to card mapping service 117, whether the account number has been provided to the merchant at the time of the open banking payment being initiated. If so, then the associated PAN for the account is retrieved 815 by the multi rail environment 103 from the merchant environment 101. This may be carried out by the account to card mapping service module 117 mapping the account number to its associated PAN. The mapping module may comprise a database (which may store the data in the form of a table) having the account details mapped to the PAN allowing easy conversion between the two. Advantageously, this reduces the number of UI steps required to obtain the card number.

A step of authentication is then carried out to authenticate the payment 817. This is carried out by sending a message from the connection module 119 to access control service 127 to initiate the process. As shown, this may be using an access control server (ACS). Specifically, in this arrangement the authentication is using 3D-secure protocol (but it would be understood that any other type of authentication may be used). At this stage, if the account number had not been initially received by the merchant, then the PAN may be requested from the customer. The PAN (which has either been received during the authentication step, or at the initial stage of the transaction through the mapping process) is then used for authentication of the customer. In some arrangements the authentication process involves directing the customer to an app, or website, which is owned by the issuer, said directing being on the customer's device with which they are making the transaction. The customer is then requested to enter personal security information which can then be verified by the issuer that the customer is legitimate. The personal security information may be any of a password, a passcode, a biometric credential, or any other type of personal security information. This is discussed in more detail in relation to Figures 3 to 6 below.

If the authentication is unsuccessful and the customer cannot be authenticated as legitimate, then the payment is declined 820. A decline message is then sent from the access control service 127, via the multirail environment 103, to the merchant 107.

Otherwise, if the authentication is successful 819, the payment from the customer's account is then to be authorised 821 against an internal merchant account 115. The internal merchant 115 account is a virtual account, within the multi-rail environment, that has an associated PAN/account number, and which receives the funds from the customer's card (as the payment is being processed on the card rail). The authorisation may be carried out by the authorisation host service 129. The process may be initiated by receiving one or more messages from the connection module 119, or directly from access control service 127 to initiate the process.

It is then determined if the authorization is successful 823. For instance, are there sufficient funds to cover the payment, and/or is the payment below a payment limit. If the authorisation is unsuccessful the payment is declined 819 and a message is sent from the authorisation host service 129, via the connection 119 to the merchant 107 confirming this. Otherwise, confirmation is received at the connection module 119 that authorisation has succeeded.

The payment then proceeds to step 825 where the funds are further transferred from the internal merchant account (which has received the funds from the customer's card as a card payment) to the internal depository account. The internal depository account is a virtual account that is used to then transfer the funds to the merchant such that settlement can take place using the open banking rail. As the transaction has already been authorised and authenticated using the card rail (as set out above) no further authorisation and authentication is needed. This is carried out at step 827 where a message is sent to the merchant indicating that the open banking payment (that was originally requested) has been completed against the internal depository account. Settlement then takes place (not shown here) between the internal depository account and the merchant account on the open banking rail thus completing the payment. This may involve a virtual account number (associated with the internal depository account) being provided to the merchant such that the final step of settlement can be completed. To the merchant it appears that the payment has been carried out solely through the open banking rail via the transfer from the internal depository account to the merchant account.

To the customer the payment will appear as a card payment since the open banking rail was not available. However, in some arrangements the issuer may decide to flag the payment in a way that it appears as an open banking payment. For instance, a flag can be applied as part of the authorisation process, by the mutli-rail environment, notifying the issuer that the transaction is a mapped transaction. The issuer may then change the way the payment is displayed such that it appears as an open banking payment rather than a card payment.

Looking at the process shown in Figure 2 in the case where the payment has been initiated as a card payment, a request is received at the multi-rail environment 103, at the authorisation merchant interface 111, where it is determined 829 if the card rail is healthy/functional (i.e., not down). This may be done by sending a request message to the card environment (such as an ISO 8583 message) from the multirail environment. If no response is received to the request, then it is known that the card rail is not functional (i.e., not healthy). In some arrangements it may be the entire card rail that is down. In other arrangements it may be that one or both authentication and authorisation parts of the card rail that are not currently in operation (such as 3DS authentication, for example).

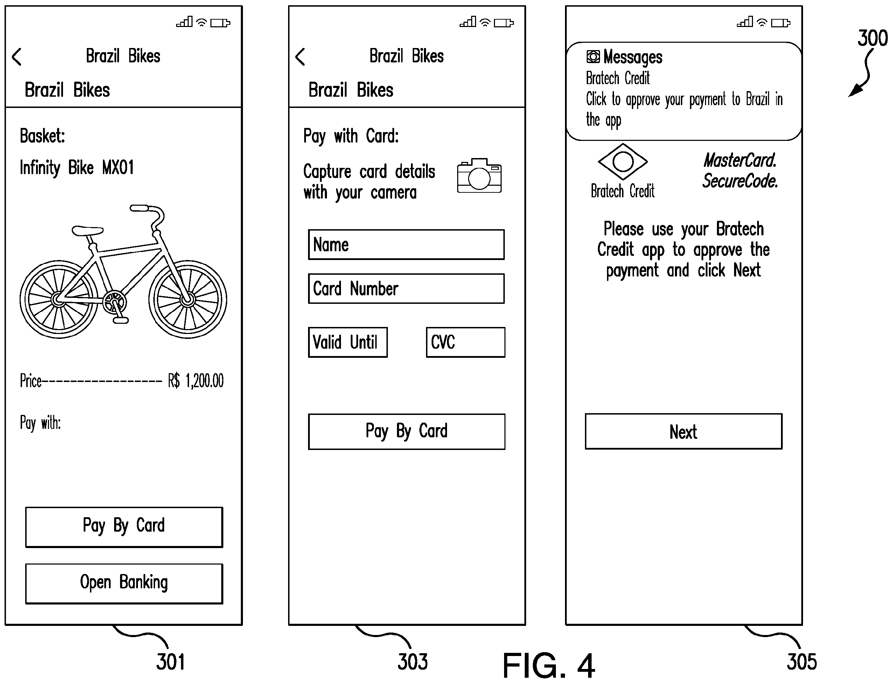

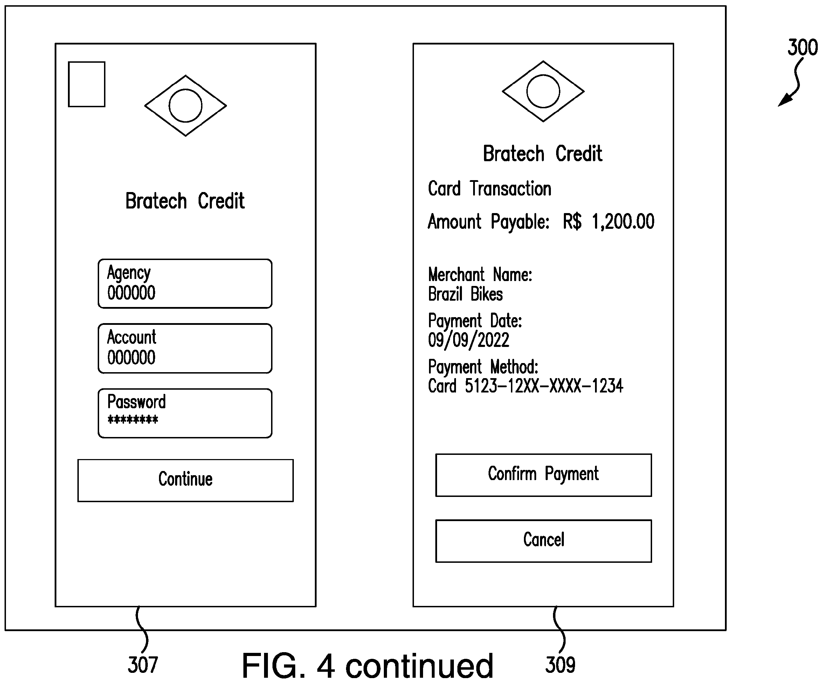

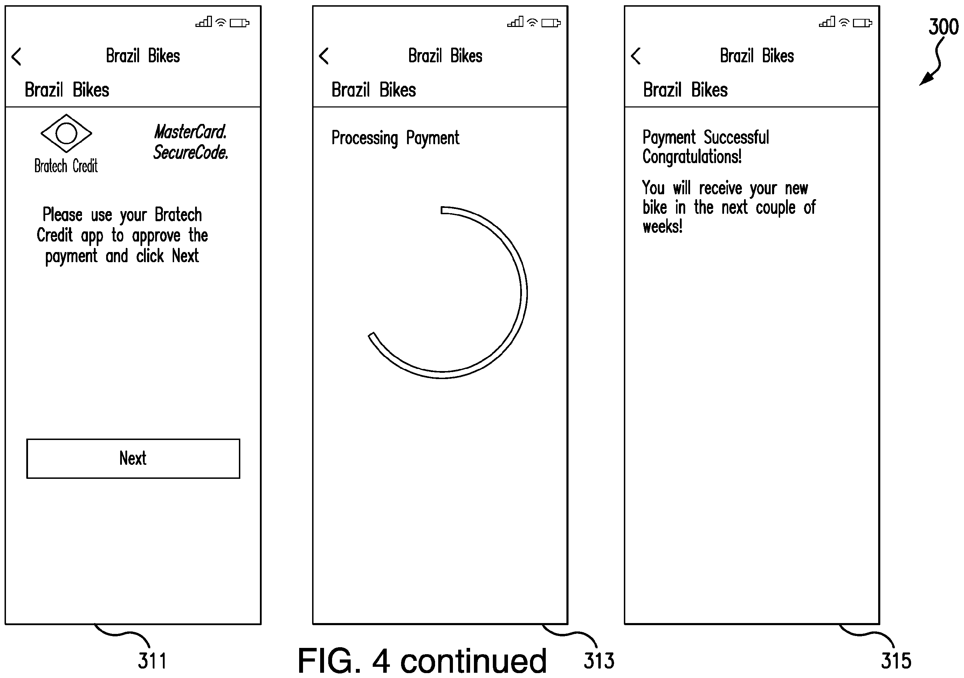

If the card rail is healthy and functioning correctly then the payment may proceed as normal via the card rail 807 using card authentication and authorisation. This is as described in relation to Figure 4 below.

If, however, the card rail is down then a decision is made, at the rail checking module 103, to switch to an alternative payment rail which may be functional. In this instance, it is determined 831, at the rail checking module 103, if the open banking rail is healthy.

This may be done using the same method as set out above when determining if the card rail is healthy.

If it is determined that the open banking rail is also not healthy then conventional stand-in decisioning may be taken 811, as outlined above.

Alternatively, if it is determined that the open banking rail is healthy at step 831 then the transaction may be routed via the open banking rail, even though the payment was initially initiated by the merchant on the card rail. In this way, the authorisation and authentication of the open banking rail can be utilised thus maintaining the high level of security and reducing fraud (as would have been expected if the card banking rail was used), without increasing the number of transactions that are declined.

If the open banking rail is determined to be healthy at step 831 it is then determined 833, by the account to card mapping service 117, if the PAN has been provided to the merchant at the time of the card payment being initiated. If so, then the account number associated with the PAN is retrieved 835 by the multi rail environment 103 from the merchant environment 101. This may involve using the account number to card mapping service 117 as outlined above.

A step of authentication is then carried out to authenticate the payment 837. This is carried out by sending a message from the connection module 121 to authentication and consent service 131 to initiate the process. As shown, this may be using open banking authentication and consent service 131. At this stage if the PAN had not been initially received by the merchant the account number may be requested from the customer. The account number (which has either been received during the authentication step, or at the initial stage of the transaction from conversion of the PAN) is then used for authentication of the customer. In some arrangements the authentication process involves directing the customer to an app, or website, on their device with which they are making the transaction, the app (or website) which is owned by the account holding institution. The customer may then be requested to enter personal security information which can then be verified by the account holding institution that the customer is legitimate. The personal security information may be any of a password, a passcode, a biometric credential, or any other type of personal security information. This is discussed in more detail in relation to Figures 3 to 6 below. Confirmation is also then requested from the customer that they consent to the transaction.

If the authorisation is unsuccessful and the customer cannot be authenticated as legitimate, then the payment is declined 820. A decline message is then sent from the authentication and consent service 131, via the multirail environment 103 (through connection 121), to the merchant 107.

Otherwise, if the authentication is successful 839, the payment from the customer's account is authorised 841 against an internal merchant account. The internal merchant account is a virtual account within the multi-rail environment that has an associated account number which receives the funds from the customer's account (as the payment is being processed on the open banking rail). The authorisation may be carried out by the open banking payment service 133. The process may be initiated by receiving one or more messages from the connection module 121, or directly from authentication and consent service 131 to initiate the process.

It is then determined if the authorization is successful 843. For instance, are there sufficient funds to cover the payment, and/or is the payment below a payment limit. If the authorisation is unsuccessful the payment is declined 819 and a message is sent from the open banking payment service 133, via the connection 121, confirming this to the merchant 107. Otherwise, confirmation is received at the connection module 121 that authorisation has succeeded.

The payment proceeds to step 845 where the funds are further transferred from the internal merchant account (which has received the funds from the customer's account as an open banking transaction) to the internal depository account. The internal depository account is a virtual account that is used to settle the funds between the merchant and the customer using the card rail. As the transaction has already been authorised and authenticated using the open banking rail (as set out above) no further authorisation and authentication is needed. This is carried out at step 847 where a message is sent to the merchant indicating that the card payment (that was originally requested) has been completed against the internal depository account. Settlement then takes place (not shown here) between the internal depository account and the merchant's account on the card rail thus completing the payment. This may involve an authorisation number (associated with the internal depository account) being provided to the merchant such that the final step of settlement can be completed (as the authentication and authorisation has been achieved as outlined above). The payment is then completed as the funds have been transferred from the customer to the merchant. To the merchant it appears that the payment has been carried out solely through the card rail via the transfer from the internal depository account to the merchant account.

To the customer the payment will appear as an open banking payment since the card rail was not available. However, in some arrangements the account holding institution may decide to flag the payment in a way that it appears as a card payment. For instance, a flag can be applied as part of the authorisation process, by the multi-rail environment, notifying the account holding institution that the transaction is a mapped transaction. The account holding institution may then change the way the payment is displayed such that it appears as a card payment rather than an open banking payment.

Figure 3 shows a series of screenshots 200 of pages that may be viewed at the customer device when making an open banking payment when the open banking rail is functioning. Screenshot 201 shows the checkout page of the merchant's website or app. Two options are shown "pay by card" and "Open Banking". Upon selecting the "Open Banking" option the customer is directed to page 203 providing them with a selection of financial institutions that they may select to perform the open banking transaction. Upon selecting a financial institution, the customer is provided with a user (i.e., customer) consent page 205. This may be provided by the authentication and consent service 131. Once the customer has confirmed the transaction, they are then redirected at page 207 to the app for the financial institution selected at 203. A login page 209 may then be presented to the customer such that they can log into the app. Having entered their security details (such as account number and password for instance), which have then been confirmed by the authentication and consent service to authorise the payment, the customer is then further asked by the financial institution if they wish to confirm the transaction, as shown in page 211. Upon confirming the payment, the customer is then redirected, at page 213, back to the merchant's website (or app). A payment processing 215 page is then displayed to the customer during which authorisation takes place in the background and the funds transferred. Once the payment has been processed a payment confirmation of the open banking transaction is then displayed to the customer, as shown in page 217 such that they know the payment is complete.

Figure 4 shows a series of screenshots 300 of pages that may be viewed at the customer device when making a card payment when the card rail is functioning. Screenshot 301 shows the checkout page of the merchant's website or app. Two options are shown "pay by card" and "Open Banking". Upon selecting the "card payment" option the customer is directed to page 303 requesting them to enter their card details. The card details are then checked by the merchant, such as through correspondence with the issuer, to determine that they are legitimate. Assuming the card details are legitimate the payment is then passed forward for authentication. As shown in page 305, 3DS authentication is then used where page 305 is displayed to the customer asking them to confirm redirection to the card issuer's app. Upon confirming redirection, the card issuer app is launched on the customer's mobile device. The customer is then, in this example, presented with page 307 where they are invited to login to the card issuer's app using their security credentials. Upon a successful login the payment is then said to have been authenticated. Page 309, in the card issuer's app, is then displayed to the customer requesting them to confirm that they approve of the payment. Upon confirming the payment, the customer is then redirected, at page 311, back to the merchant's website (or app). A payment processing 313 page is then displayed to the customer during which authorisation takes place in the background and the funds transferred. Once the payment has been processed a payment confirmation of the card payment is then displayed to the customer, as shown in page 315 such that they know the payment is complete.

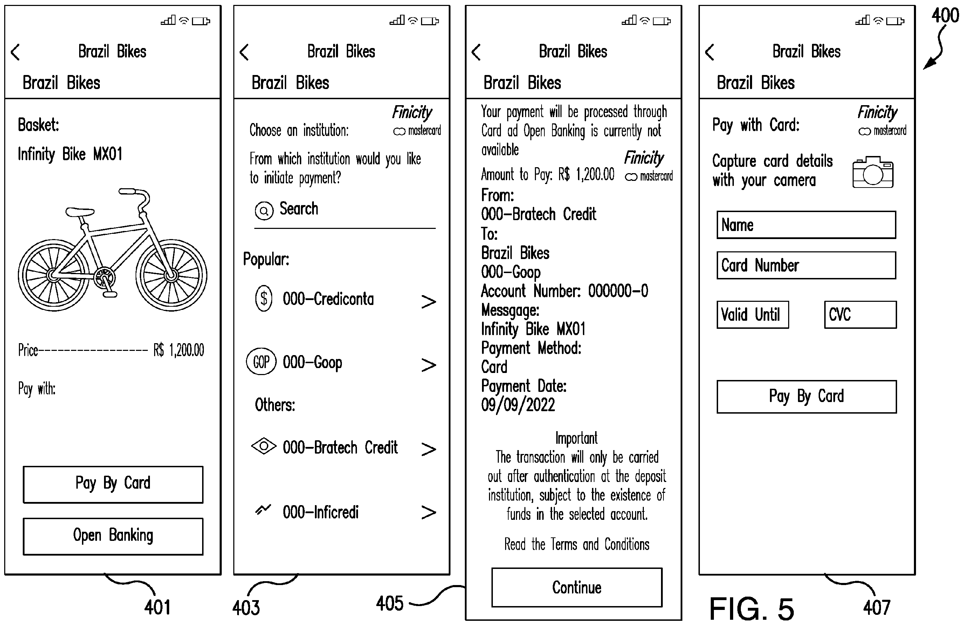

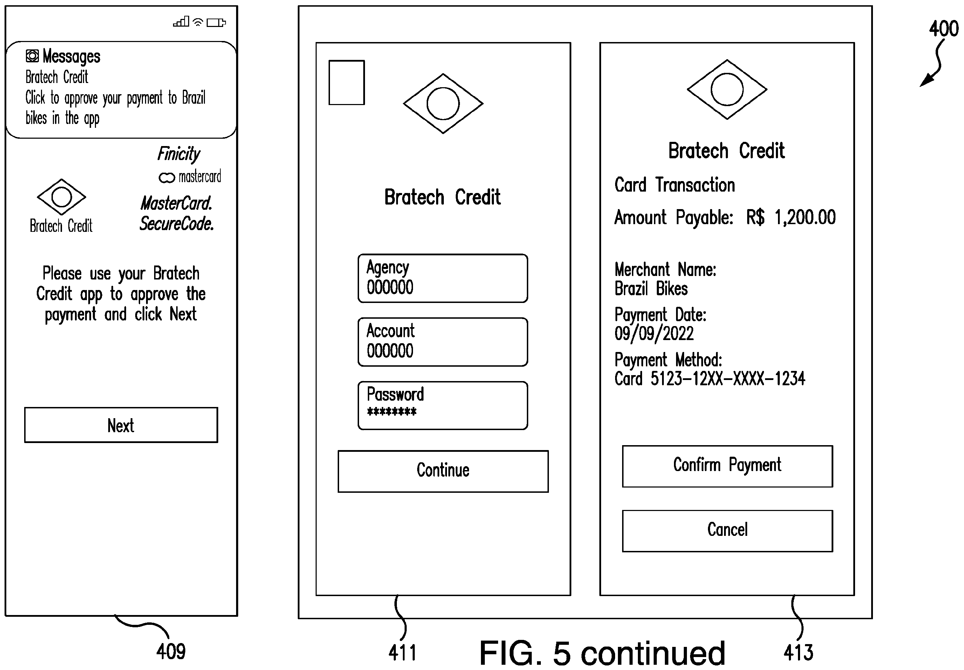

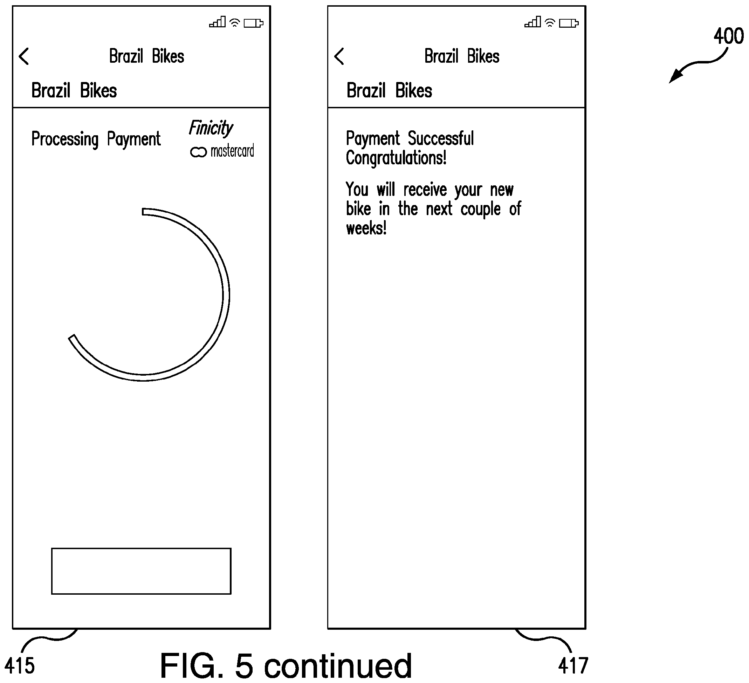

Figure 5 shows a series of screenshots 400 of pages that may be viewed at the customer device when making an open banking payment when the open banking rail is not functioning and is therefore unavailable. Screenshot 401 shows the checkout page of the merchant's website or app. Two options are shown "pay by card" and "Open Banking". Upon selecting the "Open Banking" option the customer is directed to page 403 providing them with a selection of financial institutions that they may select to perform the open banking transaction. Upon selecting a financial institution, the customer is provided with a page 405 which indicates that the open banking rail is unavailable at the present time and requesting the customer for consent to proceed on the card payment rail. Once the customer has confirmed the transaction should proceed through using the card rail, they are then presented with page 407 at the merchant site requesting the customer to enter their card details to authenticate themselves to proceed with the payment. The card details that the user enters is preferably the same card associated with the account which the customer initiated the payment as an open banking payment. This step (i.e., 407) is an optional step and in other arrangements the account to card mapping service module 117 may obtain this information from the merchant through converting (i.e. mapping) the account number provided at step 403 to the required corresponding card number. After entering their card details (or the card mapping service module 117 having determined them) the customer is then presented with screen 409 requesting their confirmation that they will be redirected to the issuer's app for authentication. As shown in screen 409 the authentication is 3DS authentication in this instance, but in other instances it may be any other type of authentication. The customer is then redirected to the app, and a login page 411 may then be presented to the customer such that they can log into the app. Having entered their security credentials, upon successfully login the payment is then said to have been authenticated. Page 413, in the card issuer's app, is then displayed to the customer requesting them to confirm that they approve of the payment. Upon confirming the payment, the customer is then redirected back to the merchant's website (or app). A payment processing 415 page is then displayed to the customer. During the payment processing 415 the payment is authorised, and the steps regarding the internal merchant account and internal depository account as described in relation to Figure 2 above are carried out behind the scenes (i.e., not visible to the merchant or customer). Once the payment has been processed a payment confirmation of the open banking payment is then displayed to the customer, as shown in page 417, such that they know the payment is complete.

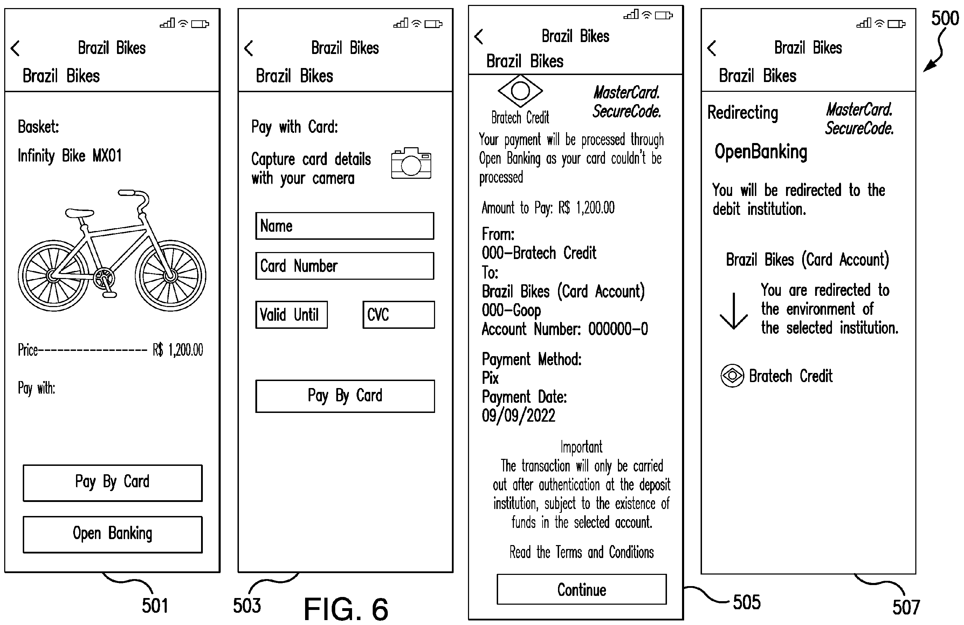

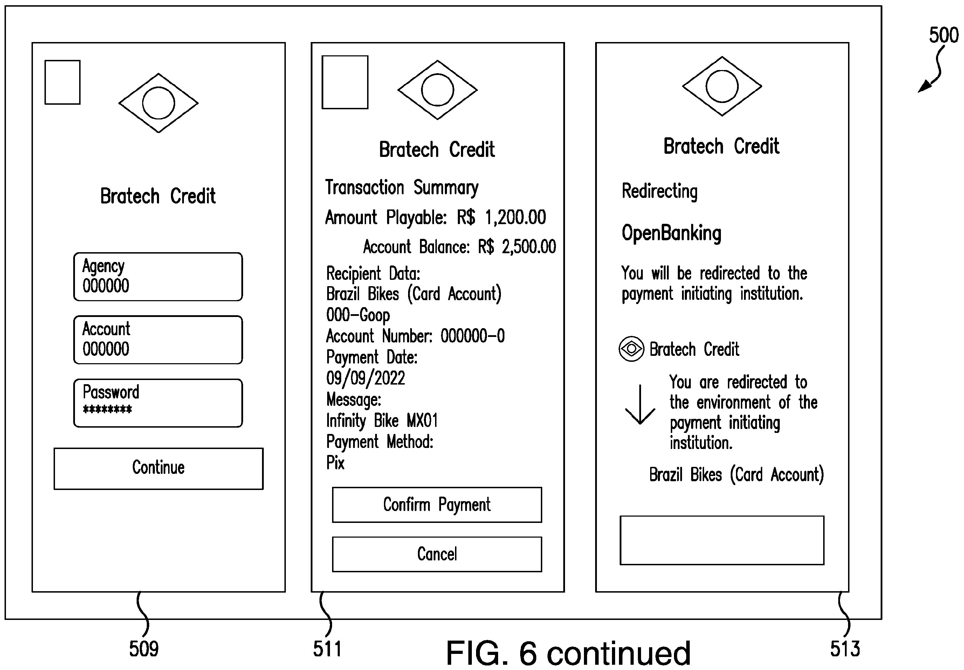

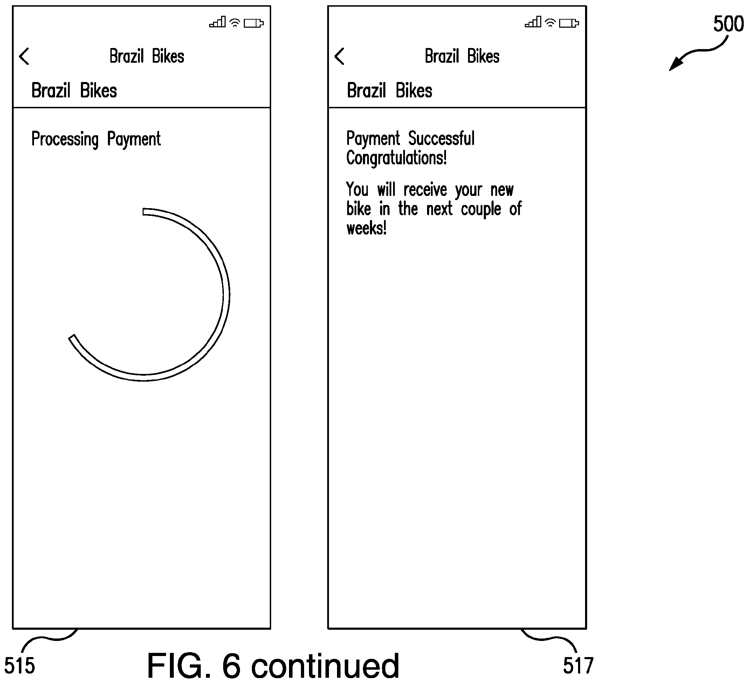

Figure 6 shows a series of screenshots 500 of pages that may be viewed at the customer device when making a card payment when the card rail is not functioning and is therefore unavailable. Screenshot 501 shows the checkout page of the merchant's website or app. Two options are shown "pay by card" and "Open Banking". Upon selecting the "pay by card" option the customer is directed to page 503 providing them with a screen for entering their card details. Upon entering their card details the customer is provided with a page 505 which indicates that the card payment rail is unavailable at the present time and requesting the customer for consent to proceed on the open banking rail. Once the customer has confirmed the transaction should proceed through using the open banking rail, they are then presented with page 507 indicating that they will be redirected for authentication and authorisation to the app (or site) of the account holding institution. This is preferably the account holding institution that is responsible for the bank account through which the open banking payment is being processed and is preferably the same as the card issuer through which the original payment was intended. A login page 509 may then be presented to the customer such that they can log into the app. Having entered their security details (such as account number and password, for instance), which have then been confirmed by the authentication and consent service to authorise the payment, the customer is then further asked by the financial institution if they wish to confirm the transaction, as shown in page 511. Upon confirming the payment, the customer is then redirected, at page 513, back to the merchant's website (or app). A payment processing 515 page is then displayed to the customer. During the payment processing 515 the transaction is authorised and the steps regarding moving the funds between the internal merchant account and internal depository account as described in relation to Figure 2 above are carried out behind the scenes. Once the payment has been processed a payment confirmation of the open banking transaction is then displayed to the customer, as shown in page 517 such that they know the payment is complete.

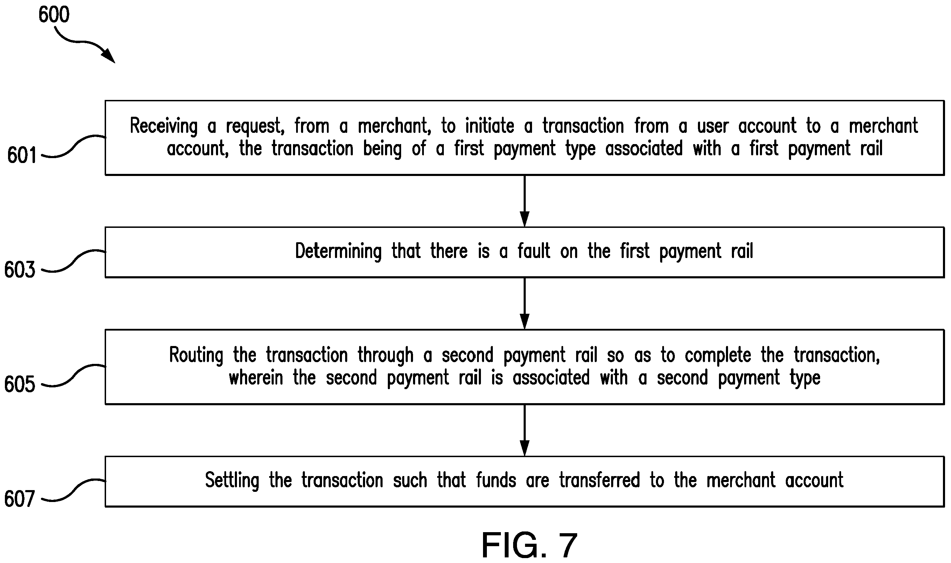

Figure 7 shows a flow diagram illustrating the steps involved in a method 600 according to an aspect of the present invention for enabling a transaction to proceed in the event of a fault on a payment rail.

At step 601 a request is received, from a merchant, to initiate a transaction from a user account to a merchant account, the transaction being of a first payment type associated with a first payment rail. The request may be received at the multirail environment as described in relation to Figures 1 and 2.

At step 603 it is determined that there is a fault on the first payment rail.

At step 605 the transaction is then routed through a second payment rail to complete the transaction, wherein the second payment rail is associated with a second payment type.

At step 607 the transaction is then settled such that funds of the transaction are transferred to the merchant account.

It will be appreciated that any of the methods described herein, and any step of the methods, can be implemented by a computer. Such implementation may take the form of a processor executing instructions stored on a non-transitory computer-readable medium or media, wherein when executed the instructions cause the processor to perform any one or more steps of any of the methods described herein. Individual steps of any method may be implemented by different processors that are all collectively acting in accordance with computer-readable instructions stored on one or more storage media. The processor(s) may be component(s) of system, for example a processor of a device.

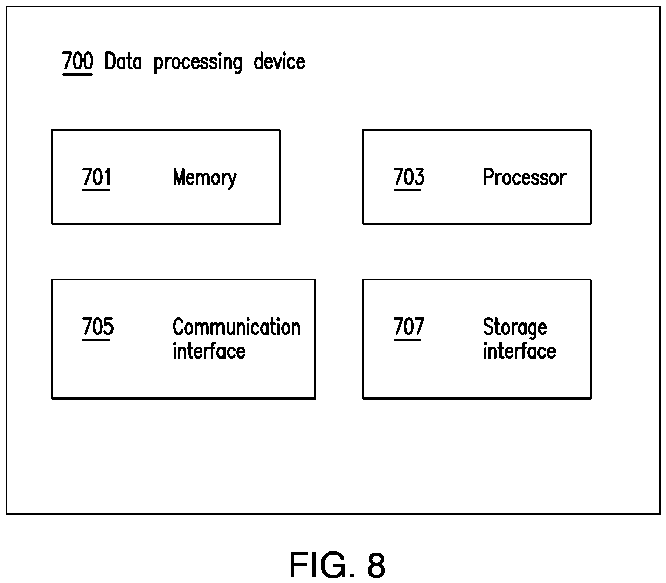

Similarly, any steps of any of the methods described herein may be performed by data processing devices. By way of example, Figure 8 shows in schematic form a data processing device 700 that is suitable for performing the functions of multirail environment 103 and/or merchant environment 101, or account holding institution/issuer environment or any module of these environments. The data processing device 700 may automatically perform any of the methods described herein.

Data processing device 700 includes a processor 703 for executing instructions. Instructions may be stored in a memory 701. Processor 703 may include one or more processing units (e.g., in a multi-core configuration) for executing instructions. The instructions may be executed within a variety of different operating systems on the data processing device 700, such as UNIX, LINUX, Microsoft Windows^{®}, etc. More specifically, the instructions may cause various data manipulations on data stored in memory 701 (e.g., create, read, update, and delete procedures). It should also be appreciated that upon initiation of a computer-implemented method, various instructions may be executed during initialization. Some operations may be required to perform one or more methods described herein, while other operations may be more general and/or specific to a particular programming language (e.g., C, C#, C++, Java, or other suitable programming languages, etc.).

Processor 703 is operatively coupled to a communication interface 705 such that data processing device 700 can communicate with a remote device, such as another data processing device of the system. For example, communication interface 705 may receive communications from another member of the system.

Processor 703 may also be communicatively coupled to a storage device such as a database, depending on the function of data processing device 700 within the context of the system. The storage device is any computer-operated hardware suitable for storing and/or retrieving data, where in the case of a secure storage medium the data is stored and retrieved securely.

The storage database may store details of the internal accounts, and/or may store data necessary for the account to card mapping service, and it can be external to data processing device 700 and located remotely. Alternatively, it can be integrated in data processing device 700. For example, data processing device 700 may include memory 701 as one or more hard disk drives acting as a storage database. Alternatively, where the storage database is external to data processing device 700, it can comprise multiple storage units such as hard disks or solid-state disks in a redundant array of inexpensive disks (RAID) configuration. The storage database may include a storage area network (SAN) and/or a network attached storage (NAS) system.

Processor 703 can be operatively coupled to the storage device (storage database) via a storage interface 707. Storage interface 707 is any component capable of providing processor 703 with access to the storage device. Storage interface 707 may include, for example, an Advanced Technology Attachment (ATA) adapter, a Serial ATA (SATA) adapter, a Small Computer System Interface (SCSI) adapter, a RAID controller, a SAN adapter, a network adapter, and/or any component providing processor 703 with access to the storage device.

Memory 701 may include, but is not limited to, RAM such as dynamic RAM (DRAM) or static RAM (SRAM), ROM, erasable programmable read-only memory (EPROM), electrically erasable programmable read-only memory (EEPROM), and non-volatile RAM (NVRAM). The above memory types are exemplary only and are not limiting as to the types of memory usable for storage of a computer program.

As used herein, the term "non-transitory computer-readable media" is intended to be representative of any tangible computer-based device implemented in any method or technology for short-term and long-term storage of information, such as, computer-readable instructions, data structures, program modules and sub-modules, or other data in any device. The methods described herein may be encoded as executable instructions embodied in a tangible, non-transitory, computer readable medium, including, without limitation, a storage device, and/or a memory device. Such instructions, when executed by a processor, cause the processor to perform at least a portion of the methods described herein. Furthermore, as used herein, the term "non-transitory computer-readable media" includes all tangible, computer-readable media, including, without limitation, non-transitory computer storage devices, including, without limitation, volatile and non-volatile media, and removable and non-removable media such as a firmware, physical and virtual storage, CD-ROMs, DVDs, and any other digital source such as a network or the Internet, as well as yet to be developed digital means, with the sole exception being a transitory, propagating signal.

As will be appreciated based on the specification herein, the above-described embodiments of the disclosure may be implemented using computer programming or engineering techniques including computer software, firmware, hardware or any combination or subset thereof. Any such resulting program, having computer-readable code means, may be embodied, or provided within one or more computer-readable media, thereby making a computer program product, i.e., an article of manufacture, according to the discussed embodiments of the disclosure. The article of manufacture containing the computer code may be made and/or used by executing the code directly from one medium, by copying the code from one medium to another medium, or by transmitting the code over a network.

While the disclosure has been described in terms of various embodiments, the person skilled in the art will recognise that the disclosure can be practiced with modification within the spirit and scope of the claims.

In the above description open banking and card payments are described. Of course, the open banking rail and the card rail are just two example types of rails that may be used for two specific types of payments. However, the present method and systems may be used for other types of payments and is not specific to these.

It is noted that the screenshots, and the specific steps, in Figures 3 to 6 are examples and are not intended to be limiting. It is also noted that in some instances it may be determined that the authentication steps shown above are not required. For instance, the payment may be of such a low value that authentication is not required. In that instance, only the authorisation steps are required.

The 3DS procedure shown in the above examples is just one type of authentication that may be used. For instance, the customer is shown as being directed to the issuer/account holding institution app. However, in another instance the customer may be directed to the issuer's/account holding institution's webpage. In addition, the information that is entered by the customer during authentication may be any type of security parameter. For instance, it may be a password, card number, biometric data, or any other type of data that may enable verification.

The terms down, not functional, not healthy, and fault are used herein the mean the same thing to each other. The terms functional, active, healthy are used herein to mean the same thing to each other.

Although it is described above that the payment is being initiated is a payment from a customer on, for instance, the merchant's online website or app, in other arrangements, it may be a payment made at a point of sale (POS) terminal or any other place at which a payment may be made between two parties.

## Claims

1. A computer implemented method for enabling a transaction to proceed in the event of a fault on a payment rail, the method comprising:
receiving a request, from a merchant, to initiate a transaction from a user account to a merchant account, the transaction being of a first payment type associated with a first payment rail;
determining that there is a fault on the first payment rail;
routing the transaction through a second payment rail, wherein the second payment rail is associated with a second payment type, wherein routing the transaction through the second payment rail comprises:
determining an account identifier associated with the user account, the account identifier being associated with the second payment type;
authenticating the transaction, using the second payment rail, said authenticating comprising using the account identifier and security data received from the user;
authorising the transaction, using the second payment rail;
settling the transaction such that funds are transferred to the merchant account.

2. The computer implemented method of claim 1, wherein the first payment rail is a card payment rail, and the second payment rail is an open banking payment rail.

3. The computer implemented method of claim 2, further comprising:
generating a virtual account associated with the merchant, and wherein authorising the transaction comprises authorising the transaction against the virtual account associated with the merchant.

4. The computer implemented method of claim 1, wherein the first payment rail is an open banking payment rail, and the second payment rail is a card payment rail.

5. The computer implemented method of claim 4, further comprising:
generating a virtual account associated with the merchant, and wherein authorising the transaction comprises authorising the transaction against a virtual card associated with the virtual account associated with the merchant.

6. The computer implemented method of any of claims 3 or 5, further comprising generating a virtual depository account, and wherein settling the transaction such that funds are transferred to the merchant account comprises transferring the funds from the virtual merchant account to the virtual depository account, and subsequently transferring funds from the virtual depository account to the merchant account.

7. The computer implemented method of claim 6, wherein the virtual depository account is unique for each transaction.

8. The computer implemented method of any preceding claim, wherein the account identifier is a second account identifier, and the method further comprises mapping a first account identifier, associated with the user account and being associated with the first payment type, to the second account identifier.

9. The computer implemented method of any preceding claim, wherein authenticating the transaction comprises using 3DS authentication.

10. The computer implemented method of any preceding claim, further comprising requesting the user for consent regarding the transaction.

11. The computer implemented method of any preceding claim, further comprising responding to the merchant with confirmation that the transaction has been completed.

12. The computer implemented method of any preceding claim, further comprising if authentication fails declining the transaction, and/or if authorization fails declining the transaction.

13. A system for enabling transactions to proceed in the event of a fault on a payment rail, the system comprising a processor configured to carry out the method of claim 1, or any claim dependent thereon.

14. A non-transitory computer-readable medium comprising instructions which, when executed by a computer, cause the computer to carry out the method of claim 1 or any claim dependent thereon.

15. A computer program product comprising instructions which, when the program is executed by a computer, cause the computer to carry out the method of claim 1 or any claim dependent thereon.
